# EUROPÄISCHE PATENTANMELDUNG

(11) **EP 1 431 114 A2**
(43) Veröffentlichungstag der Anmeldung: **23.06.2004**
(21) Anmeldenummer: 03020035.6
(22) Anmeldetag: 04.09.2003
(51) Int. Cl.: B60N 3/10

(54) **Halter für einen Getränkebehälter**

(30) Priorität: 18.12.2002 DE 20219606 U
(71) Anmelder: fischer automotive systems GmbH, 72160 Horb a.N. (DE)
(72) Erfinder: Kaupp, Klaus, 72178 Waldachtal (DE); Leopold, Gunter, 72270 Baiersbronn (DE)

(57) **Zusammenfassung**

Die Erfindung betrifft einen Halter (1b) für einen Getränkebehälter (2, 16), mit einer Behälteraufnahme (3b) und einer Klemmeinrichtung mit federnd wegdrückbaren und in die Behälteraufnahme (3b) hineinragenden Haltebacken (7b). Um eine hohe Klemmhöhe der Haltebacken bei geringem Bauraum zu erreichen, schlägt die Erfindung vor, dass die Haltebacken (7b) durch Führungsbahnen (8b) gelagert sind.

## Beschreibung

Die Erfindung betrifft einen Halter für einen Getränkebehälter mit den Merkmalen des Oberbegriffs des Anspruchs 1.

Aus dem Stand der Technik sind eine Vielzahl derartiger Halter mit einer topfförmigen Behälteraufnahme für Tassen, Becher, Getränkedosen, Flaschen oder dgl. bekannt. Die bekannten Halter weisen ein oder mehrere, zum Teil über den Umfang verteilt angeordnete Haltebacken oder dgl., auf. Diese ragen in das Innere der topfförmigen Behälteraufnahme hinein und weisen schräge und/oder gerundete Gleitflächen auf. Aufgrund einer Lagerung und Federung können die Haltebacken von der Umfangsfläche eines Getränkebehälters radial weggedrückt werden und geben durch Klemmung dem Getränkebehälter Halt. Ein derartiger Halter ist beispielsweise in DE 296 06 583.8 beschrieben. Die entsprechende Klemmeinrichtung weist Haltebacken auf, die jeweils einzeln über Schwenklager ihre Ausgleichsbewegung ausführen. Als Federelement wird ein elastischer Kreisring oder ein Band vorgeschlagen, das die Behälteraufnahme umgreift. Eine derartige Klemmeinrichtung hat jedoch den Nachteil, dass die Haltehöhe der Haltebacken in Bezug auf den Boden der Behälteraufnahme gering ist. Das rührt daher, dass aufgrund der Schwenklagerung erhebliche Gleitflächen an der Oberseite der Haltebacken ausgebildet sein müssen, damit es durch das Einstellen eines Getränkebehälters zu einem Verschwenken der Haltebacken kommt. Der eigentliche Klemmpunkt ist unterhalb der Gleitflächen angeordnet und liegt damit deutlich unter dem oberen Rand der Behälteraufnahme. Um einen sicheren Halt zu gewährleisten, muss daher die Behälteraufnahme sehr tief ausgebildet werden, woraus ein erheblicher Bauraum resultiert.

Der Erfindung liegt die Aufgabe zugrunde, einen Halter für einen Getränkebehälter der eingangs genannten Art zu schaffen, der eine hohe Klemmhöhe der Haltebacken bei geringem Bauraum gewährleistet.

Diese Aufgabe wird erfindungsgemäß durch die Merkmale des Anspruchs 1 gelöst. Der Halter weist Haltebacken auf, die durch Führungsbahnen gelagert sind. Hierzu sind beispielsweise in einem Gehäuse des Halters Nuten oder andere Vertiefungen angeordnet, in welche Zapfen oder andere Vorsprünge, die an den Haltebacken angeordnet sind, eingreifen. Umgekehrt können die Vorsprünge auch im Gehäuse und die Vertiefungen an den Haltebacken angeordnet sein. Durch die Lagerung mittels Führungsbahnen kann die Geometrie der Bewegung und die in Abhängigkeit von der jeweiligen Stellung der Haltebacken auftretenden Haltekräfte sehr flexibel gesteuert werden. So ist es beispielsweise möglich, durch eine schräg nach oben gerichtete Führung der Haltebacken Klemmpunkte oberhalb des oberen Randes der Behälteraufnahme zu erreichen. Auf diese Weise werden schmale Getränkebehälter, wie beispielsweise Flaschen, hoch geklemmt, während breite Getränkebehälter, wie beispielsweise Tassen, tief geklemmt werden. Außerdem erlaubt die Lagerung in Führungsbahnen, dass diese mit der Form der Haltebacken derart abgestimmt sind, dass auch taillierte Flaschen entnommen werden können, ohne dass dabei die Haltebacken mit den Führungsbahnen ein Gesperre bilden.

In einer bevorzugten Ausführungsform sind die Führungsbahnen gekrümmt. Hierdurch kann eine kombinierte Translations- und Rotationsbewegung für die Haltebacken vorgegeben werden und gleichzeitig eine optimale Abstimmung zwischen der Bewegungsbahn der Haltebacken, deren Form und der Form der Getränkebehälter erfolgen. Ist darüber hinaus jede Haltebacke durch mindestens zwei nicht-parallele Führungsbahnen gelagert, können komplexe Bewegungen der Haltebacken vorbestimmt werden.

Vorzugsweise weist der Halter eine entnehmbare Wanne als Behälteraufnahme auf. Dies ermöglicht eine einfache Reinigung der Behälteraufnahme. Auch hier können wiederum die Form der Haltebacken sowie die Gestaltung der Führungsbahnen derart gewählt werden, dass die Wanne entnommen und eingestellt werden kann, ohne dass die Haltebacken gesondert mit einer zweiten Hand verschoben werden müssen.

Die Erfindung wird nachfolgend anhand dreier in der Zeichnung dargestellter Ausführungsbeispiele näher erläutert. Es zeigen:
- Figur 1: einen erfindungsgemäßen Halter in einer perspektivischen Darstellung mit einem Teilausschnitt;
- Figur 2: ein zweites Ausführungsbeispiel eines erfindungsgemäßen Halters in einer Schnittdarstellung sowie
- Figur 3: ein drittes Ausführungsbeispiel eines erfindungsgemäßen Halters in einer Schnittdarstellung.

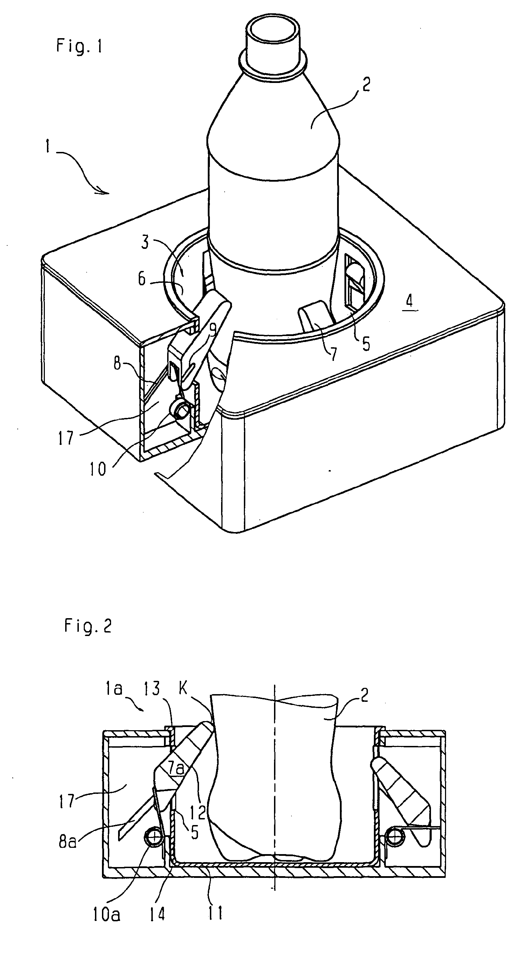

Der in Figur 1 dargestellte Halter 1 ist zum Einbau in ein Kraftfahrzeug vorgesehen und kann zum Halten einer Flasche 2 oder anderer Getränkebehälter wie beispielsweise Tassen, Becher, Getränkedosen oder dgl. verwendet werden. Er weist eine topfförmige Behälteraufnahme 3 auf. An einer offenen Oberseite der Behälteraufnahme 3 weist der Halter 1 einen Deckel 4 auf. Alternativ könnte die Behälteraufnahme einstückig in eine flanschartige Blende übergehen, die zum Verschließen einer Einbauöffnung für den Halter 1 im Kraftfahrzeug vorgesehen ist. In Öffnungen 5 der inneren Umfangswand 6 der Behälteraufnahme 2 sind vier Haltebacken 7 über den Umfang verteilt angeordnet. Die Haltebacken 7 verengen die lichte Weite der Behälteraufnahme 3 und geben klemmend der Flasche 2 Halt. Sie sind in nutartigen, in Seitenwänden 17 der Öffnungen 5 eingearbeiteten Führungsbahnen 8 gelagert und weisen hierzu Vorsprünge 9 auf, die in die Führungsbahnen 8 eingreifen. Die Führungsbahnen 8 sind schräg nach oben gerichtet, so dass die Haltebacken 7 bei schmalen Getränkebehältern, wie der dargestellten Flasche 2, hoch bis über die Oberkante des Deckels 4 geführt werden. Hierdurch wird eine hohe Klemmhöhe erreicht. Bei breiten Getränkebehältern werden die Haltebacken 7 dagegen schräg nach unten gedrückt, so dass beispielsweise Tassen durch einen niedrigen Klemmpunkt gegriffen werden. Eine Feder 10 bewirkt, dass die Haltebacken 7 entlang der Führungsbahn 8 in Richtung der Mittelachse der Behälteraufnahme 3 gedrückt werden.

Figur 2 zeigt einen Halter 1a, der eine entnehmbare Wanne 11 als Behälteraufnahme aufweist. Die Haltebacken 7a sind in Führungsbahnen 8a geführt. Beim Einstellen der Flasche 2 werden die Haltebacken 7a entgegen der Wirkung der Feder 10a schräg nach unten gedrückt. Aufgrund der Taillierung der Flasche 2 beschreiben die Haltebacken 7a bis zum Erreichen der entgültigen Klemmpunkte K eine abwechselnde Auf- und Abwärtsbewegung. Die Neigung der Unterkanten 12 der Haltebacken 7a und die Neigung der Führungsbahn 8a sind dabei derart abgestimmt, dass die an der Berührstelle zwischen Haltebacke 7a und Flasche 2 wirkenden Kraftvektoren stets einen nach unten in Richtung der Führungsbahn 8a wirkenden Anteil aufweisen. Hierdurch wird vermieden, dass die Haltebacken 7a beim Ein- und Ausführen eines Getränkebehälters ein Gesperre bilden. Weiterhin bewirkt die Neigung der Unterkanten 12 der Haltebacken 7a, dass die Wanne 11 durch einfaches Greifen am oberen Flansch 13 entnommen werden kann. Hierbei gleiten die Unterkanten 12 der Haltebacken 7a an den unteren Öffnungskanten 14 der Öffnungen 5 ab. Beim Wiedereinstellen der Wanne 11 werden die Haltebacken 7a so weit nach unten und außen gedrückt, bis sie an der Außenwand der Wanne 11 entlang und schließlich durch die Öffnungen 5 gleiten. Weder beim Einstellen noch beim Herausnehmen der Wanne müssen die Haltebacken 7a gesondert gehandhabt werden.

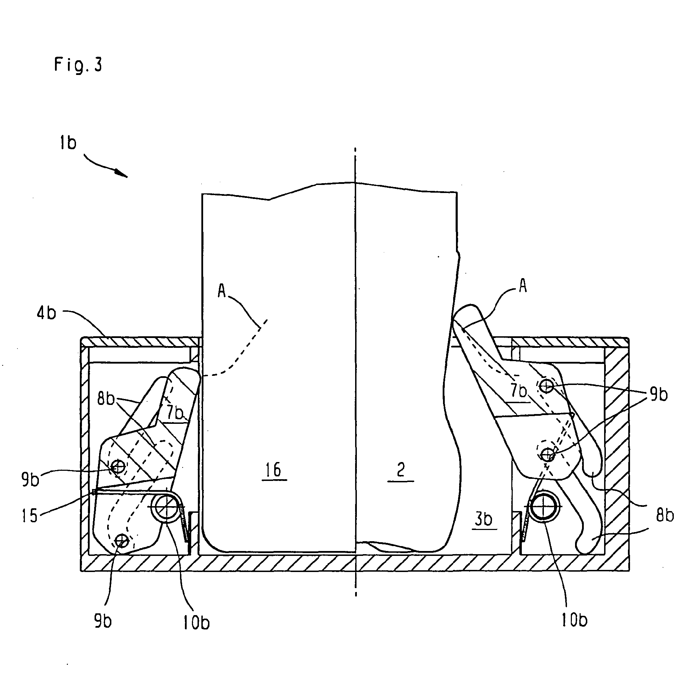

Der in Figur 3 dargestellte Halter 1b weist ebenfalls Haltebacken 7b auf, die in Führungsbahnen 8b gelagert sind. Dabei bilden je zwei nicht-parallele Führungsbahnen 8a ein Paar, in die zwei zapfenförmige Vorsprünge 9b der Haltebacken 7b eingreifen. Die Federn 10b drücken die Haltebacken 7b über deren Gleitkante 15 nach oben und sorgen so für die erforderlichen Klemmkräfte. Durch die teilweise gekrümmten Führungsbahnen 8b und deren Nicht-Parallelität kommt es beim Verschieben der Haltebacken 7b zu einer kombinierten Translations- und Rotationsbewegung. Die Linie A zeigt in etwa die Bewegungsbahn des Berührpunkts zwischen einem gedacht breiter bzw. schmaler werdenden Getränkebehälter. Durch eine mögliche nicht-zylindrische Form des Getränkebehälters kann der tatsächliche Berührpunkt etwas von dieser Linie abweichen. Während die linke Hälfte des Halters 1b mit einer breiten Tasse 16 als Getränkebehälter dargestellt ist, zeigt die rechte Hälfte wiederum die Flasche 2. Es wird deutlich, dass bei schmalen Getränkebehältern eine hohe Klemmhöhe erreicht wird, während bei breiten Getränkebehältern, die häufig eher niedrig sind, die Klemmung direkt unterhalb des Deckels erfolgt. Auf diese Weise sind schmale, hohe Getränkebehälter sehr gut gegen Umfallen und Verschieben geschützt und bei breiten, niedrigen Getränkebehältern bleibt deren oberer Rand zum Greifen frei. Dennoch ist die Bauraumhöhe des Halters 1b gegenüber den bekannten, vergleichbaren Haltern gering.

## Patentansprüche

1. Halter (1, 1a, 1 b) für einen Getränkebehälter (2, 16), mit einer Behälteraufnahme (3, 11) und einer Klemmeinrichtung mit federnd wegdrückbaren und in die Behälteraufnahme (3, 3b, 11) hineinragenden Haltebacken (7, 7a, 7b), **dadurch gekennzeichnet, dass** die Haltebacken (7, 7a, 7b) durch Führungsbahnen (8, 8a, 8b) gelagert sind.

2. Halter nach Anspruch 1, **dadurch gekennzeichnet, dass** die Führungsbahnen (8b) gekrümmt sind.

3. Halter nach Anspruch 1, **dadurch gekennzeichnet, dass** jede Haltebacke durch mindestens zwei nicht-parallele Führungsbahnen (8b) gelagert ist.

4. Halter nach Anspruch 1, **dadurch gekennzeichnet, dass** die Behälteraufnahme eine entnehmbare Wanne (11) ist.
